# FASCICULE DE BREVET EUROPEEN

(11) **EP 3 301 341 B1**
(45) Date de publication et mention de la délivrance du brevet: **24.07.2019**
(21) Numéro de dépôt: 17193547.1
(22) Date de dépôt: 27.09.2017
(51) Int. Cl.: F16L 37/23, F16L 37/32, F16L 37/34, F16L 37/084, F16L 37/38

(54) **RACCORD ET CIRCUIT HYDRAULIQUE DE FREINAGE POUR CYCLE INCORPORANT UN TEL RACCORD**
ANSCHLUSS UND HYDRAULISCHER BREMSSCHALTKREIS FÜR RAD, DAS EINEN SOLCHEN ANSCHLUSS INTEGRIERT HAT
COUPLING AND HYDRAULIC BRAKING CIRCUIT FOR CYCLE INCORPORATING SUCH A COUPLING

(30) Priorité: 28.09.2016 FR 1659153
(43) Date de publication de la demande: 04.04.2018
(73) Titulaire: Staubli Faverges, 74210 Faverges (FR)
(72) Inventeur: TIBERGHIEN, Alain-Christophe, 74230 SEVRIER (FR); DURIEUX, Christophe, 73200 GILLY SUR ISERE (FR); MILLE, Florian, 74210 FAVERGES (FR)
(74) Mandataire: Lavoix

(56) Documents cités:
- DE-U1-202012 011 691
- FR-A5- 2 129 415
- GB-A- 1 291 752
- US-A- 5 255 699

## Description

L'invention concerne un raccord pour la jonction de canalisations de fluide, ainsi qu'un circuit hydraulique de freinage pour cycle incorporant un tel raccord. Par cycle, on entend un véhicule muni de deux à trois roues, tel une bicyclette, ou un motocycle.

Il est connu de FR 2 129 415 de sécuriser la configuration accouplée d'un raccord en aménageant sur l'élément mâle une gorge annulaire externe étagée avec une portion avant et une portion arrière pour coopérer avec des billes de verrouillage de l'élément femelle. L'élément femelle comprend en outre un tiroir mobile par rapport à un piston central fixe et une bague externe de verrouillage qui est pourvue d'un rebord interne disposé longitudinalement entre deux encoches internes avant et arrière de différentes profondeurs.

L'accouplement du raccord se fait en introduisant l'élément mâle dans l'élément femelle, et il n'est pas nécessaire d'actionner la bague de verrouillage vers l'arrière puisque le tiroir repousse les billes dans l'encoche avant de la bague, ce qui maintient la bague de verrouillage en position rétractée lorsque l'élément femelle est désaccouplé de l'élément mâle. Le mouvement de l'élément mâle dans l'élément femelle déplace le tiroir, libère la bague de verrouillage, et permet à la portion arrière de la gorge de l'élément mâle de s'aligner avec les billes de verrouillage. La bague de verrouillage est alors automatiquement repoussée par son ressort, ce qui aligne l'encoche arrière avec les billes de verrouillage. L'élément mâle peut alors être repoussé vers l'avant de l'élément femelle par le fluide transitant dans le raccord et par le tiroir de l'élément femelle pour se verrouiller avec les billes de verrouillage intercalées radialement entre la portion avant de la gorge et l'encoche arrière de la bague de verrouillage. En configuration accouplée, la bague de verrouillage ne peut être rétractée car les billes de verrouillage interfèrent longitudinalement avec le rebord interne de la bague et bloquent le déplacement de la bague de verrouillage vers sa position rétractée.

Pour désaccoupler le raccord, il est nécessaire de pousser l'élément mâle davantage dans l'élément femelle. Cela place en effet la portion arrière de la gorge en regard des billes, qui peuvent ainsi se dégager radialement du rebord interne, la bague de verrouillage pouvant alors être rétractée vers l'arrière pour accueillir les billes de verrouillage dans l'encoche avant et libérer le passage pour l'élément mâle, qui peut être extrait de l'élément femelle.

La double manoeuvre nécessaire pour le désaccouplement évite les désaccouplements accidentels du raccord, par exemple sous l'effet d'accélérations brutales.

US-B-5 255 699 décrit un raccord comprenant un élément mâle muni d'une soupape. La soupape comprend une partie avant qui s'appuie contre un siège du corps mâle. La partie avant se prolonge vers l'arrière par une tige, autour de laquelle sont montés un joint d'étanchéité et un support pour un ressort de rappel qui repousse la soupape en position fermée contre le siège. La présence du siège, dont le diamètre minimal est inférieur au diamètre maximal de la partie avant, du joint et du support implique le montage de la soupape par l'arrière du corps mâle.

L'objectif de l'invention est de proposer un raccord à double manoeuvre garantissant une double obturation du passage de fluide, compatible avec un très faible encombrement, de l'ordre de 6mm, une section de passage de fluide maximale, limitant les égouttures au désaccouplement et les risques de désaccouplement accidentel.

A cet effet, l'invention concerne un raccord fluidique comprenant un élément mâle et un élément femelle complémentaire de l'élément mâle, destinés s'emmancher l'un dans l'autre selon un axe central du raccord,
- l'élément mâle comprenant un corps mâle définissant un canal interne de circulation de fluide, le corps mâle étant muni d'une gorge externe étagée circonférentielle avec une portion avant et une portion arrière adjacentes selon l'axe central, le diamètre de la portion avant étant supérieur au diamètre de la portion arrière, et
- l'élément femelle comprenant :
   - un corps femelle délimitant une cavité interne avec une partie avant apte à recevoir le corps mâle,
   - des billes de verrouillage mobiles radialement dans un logement du corps femelle, entre une position de verrouillage du corps mâle dans le corps femelle dans une configuration accouplée du raccord et une position de déverrouillage dans laquelle les billes de verrouillage autorisent le retrait du corps mâle hors du corps femelle;
   - une bague de verrouillage munie d'une encoche interne avant circonférentielle et d'une encoche interne arrière circonférentielle séparées axialement par un rebord interne circonférentiel, la bague de verrouillage étant mobile entre une position avancée, où l'encoche interne arrière maintient les billes de verrouillage en position de verrouillage, et une position rétractée, où l'encoche interne avant est alignée radialement avec les billes de verrouillage de manière que les billes de verrouillage puissent atteindre leur position de déverrouillage,
   - un ressort qui repousse la bague de verrouillage en position avancée,
   - une soupape mobile dans le corps femelle entre une position d'ouverture et une position de fermeture d'une partie arrière de la cavité interne et repoussée par un ressort vers sa position de fermeture,
- lorsque les billes de verrouillage coopèrent avec la portion avant de la gorge externe étagée du corps mâle emmanché dans le corps femelle, les billes de verrouillage forment obstacle au rebord interne de la bague de verrouillage selon l'axe central, lorsque les billes de verrouillage coopèrent avec la portion arrière de la gorge externe étagée, les billes de verrouillage sont aptes à se dégager vis-à-vis du rebord interne,
- dans une configuration intermédiaire, les billes de verrouillage sont alignées avec la portion arrière de la gorge externe étagée et l'encoche avant,
- en configuration accouplée du raccord, les billes de verrouillage sont en prise avec la portion avant de la gorge externe étagée et avec l'encoche interne arrière.

Ce raccord est caractérisé en ce que l'élément mâle comprend une soupape mobile dans le canal interne du corps mâle entre une position d'ouverture et une position de fermeture du canal interne, et un ressort qui repousse la soupape de l'élément mâle vers sa position de fermeture, en ce que la soupape de l'élément mâle est formée d'une pièce avant, d'une pièce arrière et d'au moins un organe de liaison qui sont des pièces distinctes, l'organe de liaison étant apte à venir en butée axiale contre une surface interne du canal interne lorsque la soupape de l'élément mâle est en position de fermeture du canal interne, et en ce que les dimensions radiales maximales de la pièce avant, de la pièce arrière et de l'organe de liaison sont inférieures au diamètre interne minimal d'une surface cylindrique d'embouchure du canal interne de l'élément mâle, de manière que la pièce avant, la pièce arrière et l'organe de liaison puissent être introduits dans le canal interne de l'élément mâle par l'avant du corps mâle.

Grâce à l'invention, la déconnexion du raccord est sécurisée par la double manoeuvre, et il n'y a pas de fuite au désaccouplement, les deux éléments de raccord étant équipés de soupapes. La structure de l'élément mâle et de sa soupape permet un montage avantageux des composants de la soupape par l'avant.

Selon des aspects avantageux mais non obligatoires de l'invention, un tel raccord peut incorporer une ou plusieurs des caractéristiques suivantes, prises dans toute combinaison techniquement admissible :
- L'une parmi la pièce avant et la pièce arrière de la soupape de l'élément mâle présente une extrémité de diamètre réduit engagée dans un alésage de l'autre parmi la pièce arrière et la pièce avant, l'organe de liaison étant disposé radialement à l'extérieur de l'extrémité de diamètre réduit.
- L'extrémité de diamètre réduit est munie d'une gorge externe et d'une collerette disposée axialement entre la gorge externe et une surface finale de l'extrémité de diamètre réduit, alors que le canal interne comporte une rainure interne circonférentielle dont le rayon est supérieur ou égal à la somme du rayon externe de la collerette et de la dimension radiale de l'organe de liaison et alors que la pièce de la soupape avec alésage présente des logements radiaux traversants débouchant dans l'alésage, l'organe de liaison étant en prise dans les logements radiaux et dans la gorge externe lorsque les billes de liaison sont décalées axialement de la rainure interne.
- La rainure interne du corps mâle est décalée axialement par rapport aux organes de liaison lorsque la soupape de l'élément mâle est en position de fermeture du canal interne.
- La pièce de la soupape munie de la gorge externe est la pièce arrière, alors que la pièce munie des logements radiaux est la pièce avant, et alors que le ressort de l'élément mâle repousse la pièce arrière en contact axial avec la pièce avant.
- L'extrémité de diamètre réduit se termine par une surface tronconique, dont l'angle au sommet est de préférence de 90°.
- Le corps mâle est formé d'une seule pièce, et le diamètre interne du canal interne au niveau d'une queue arrière du corps mâle est inférieur au diamètre interne minimal de la surface cylindrique d'embouchure du canal interne.
- La pièce arrière de la soupape de l'élément mâle comprend des orifices radiaux et un orifice axial de passage du fluide ainsi qu'un logement pour le ressort repoussant la soupape de l'élément mâle vers une position de fermeture du canal interne.
- L'organe de liaison est formé par des billes, de préférence trois billes régulièrement réparties autour de l'axe central du raccord.
- La soupape de l'élément femelle comprend un tiroir mobile en translation dans la partie arrière de la cavité interne du corps femelle autour d'un piston central logé dans le corps femelle, le tiroir étant adapté pour coopérer axialement avec le corps mâle par un contact entre une face plane du tiroir et une face plane du corps mâle, le piston central étant adapté pour coopérer axialement avec la soupape de l'élément mâle par un contact entre une face plane du piston et une face plane de la soupape de l'élément mâle.
- Dans les positions de fermeture respectives de la soupape de l'élément mâle et de la soupape de l'élément femelle, la face plane du corps mâle est alignée axialement avec la face plane de la soupape, et la face plane du tiroir est alignée axialement avec la face plane du piston.
- Le piston central est solidarisé au corps femelle par une goupille s'étendant transversalement à l'axe central et traversant une partie arrière du piston et le corps femelle.
- L'élément mâle comprend un joint d'étanchéité radialement disposé entre la soupape de l'élément mâle et le corps mâle lorsque la soupape de l'élément mâle est en position de fermeture du canal interne, le joint d'étanchéité étant logé de préférence dans une gorge de la soupape.
- Le corps femelle comprend une butée axiale apte à coopérer avec le corps mâle pour limiter le mouvement d'emmanchement du corps mâle dans le corps femelle.
- Le corps femelle comporte un filetage externe adapté au vissage de l'élément femelle dans un bâti.
- Le piston central est monté dans un logement quadrilobé du corps femelle.

L'invention concerne également un circuit hydraulique de freinage pour cycle, incluant au moins un étrier et un bloc de levier de frein, un tuyau de liaison fluidique entre l'étrier et le bloc de levier de frein, et au moins un raccord tel que mentionné ci-dessus pour le raccordement fluidique du tuyau avec l'étrier ou avec le bloc de levier de frein.

Grâce au raccord de l'invention, les désaccouplements intempestifs du circuit hydraulique qui conduiraient à une perte de freinage sont évités et les manoeuvres de désaccouplement/accouplement, nécessaires par exemple pour purger régulièrement le circuit hydraulique de freinage, sont facilitées par la connexion rapide offerte par le raccord de l'invention.

L'invention sera mieux comprise et d'autres avantages de celle-ci apparaîtront plus clairement à la lumière de la description qui va suivre d'un raccord conforme à son principe, faite à titre d'exemple non limitatif en référence aux dessins annexés, dans lesquels :
- la figure 1 est une coupe longitudinale d'un élément mâle appartenant à un raccord conforme à l'invention ;
- la figure 2 est une coupe selon le plan II à la figure 1 ;
- la figure 3 est une vue éclatée en perspective partielle d'une soupape de l'élément mâle de la figure 1 ;
- la figure 4 est une coupe longitudinale d'un élément femelle appartenant à un raccord conforme à l'invention ;
- la figure 5 est une coupe selon le plan V à la figure 4 ;
- la figure 6 est une coupe longitudinale des éléments mâle et femelle au cours d'une première phase d'accouplement du raccord ;
- la figure 7 est une coupe similaire à la figure 6, correspondant à une phase intermédiaire d'accouplement du raccord ;
- la figure 8 est une coupe similaire aux figures 6 et 7, du raccord en configuration accouplée ;
- la figure 9 est une coupe transversale représentant une première étape de montage de la soupape de la figure 3 dans l'élément mâle de la figure 1 ;
- la figure 10 est une coupe similaire à la figure 9, représentant une seconde étape de montage de la soupape ;
- la figure 11 est une représentation schématique d'un circuit hydraulique de frein de cycle conforme à l'invention ;
- la figure 12 est une coupe longitudinale d'un élément mâle appartenant à un raccord conforme à un second mode de réalisation de l'invention.

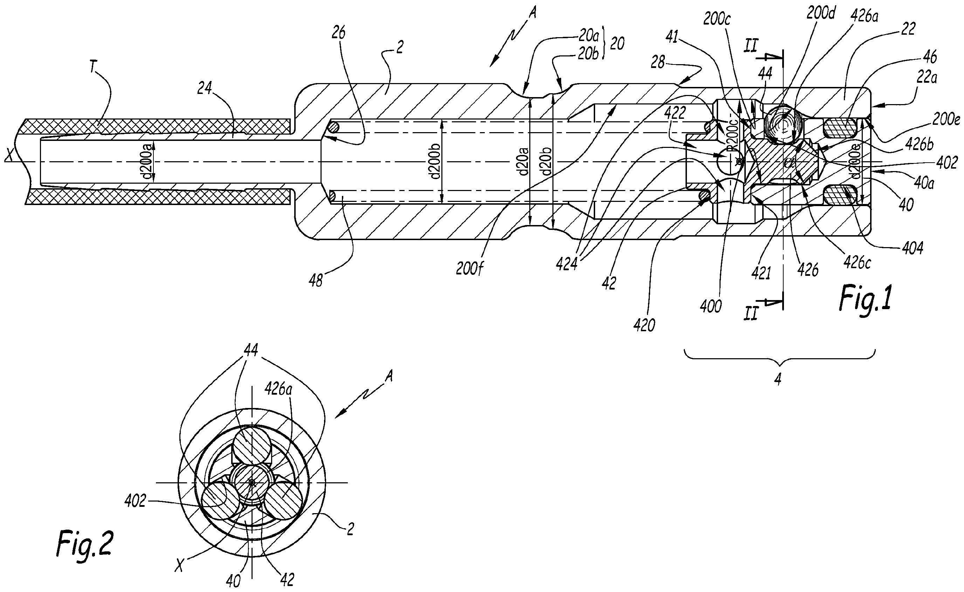

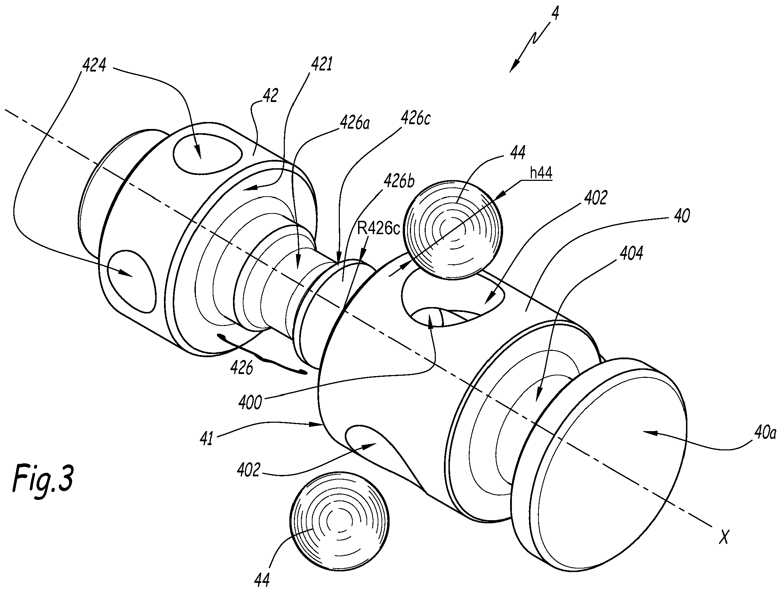

Les figures 1 à 8 représentent un raccord R pour la jonction de canalisations de fluide, comprenant un élément mâle A et un élément femelle B. L'élément mâle A est adapté pour s'emmancher dans l'élément femelle B selon une direction d'emmanchement définie par un axe longitudinal X qui forme l'axe central de l'élément mâle A et de l'élément femelle B.

Dans ce qui suit, les termes « axial, radial, axialement, radialement » sont employés en référence à l'axe central X du raccord R. Une surface radiale est une surface s'étendant parallèlement à et entourant l'axe X, et une surface axiale est une surface perpendiculaire à l'axe X.

Pour l'élément mâle A et l'élément femelle B, le côté avant est celui qui est orienté respectivement du côté de l'élément femelle B ou du côté de l'élément mâle A, tandis que le côté arrière est celui qui est situé à l'opposé de l'élément femelle B ou de l'élément mâle A. Une position « avancée » est une position située du côté avant, et une position « rétractée » est une position située vers l'arrière.

Les adjectifs « interne » et « externe » sont employés en référence à l'axe central X pour des éléments se trouvant respectivement orientés vers l'axe central X ou à son opposé.

Les adjectifs « intérieur » et « extérieur » sont employés en référence à l'axe central X pour des éléments se trouvant respectivement du côté de l'axe central X par rapport à un autre élément ou à l'opposé de l'axe X par rapport à cet autre élément.

L'élément mâle A comprend un corps mâle 2 monobloc comprenant une gorge externe étagée 20 circonférentielle, une extrémité avant 22 de diamètre externe réduit par rapport au diamètre externe du corps 2 dans la zone de la gorge externe 20, et une queue arrière 24. La gorge externe 20 comprend une portion arrière 20a et une portion avant 20b adjacentes selon l'axe X, la portion avant 20b se trouvant du côté de l'extrémité avant 22. La portion avant 20b a un diamètre externe d20b en fond de gorge supérieur au diamètre externe d20a en fond de gorge de la portion arrière 20a.

La queue arrière 24 présente une surface cannelée pour la liaison à un tuyau T de liaison fluidique entre un étrier E et un bloc de levier de frein 8 d'un système de freinage pour cycle.

L'élément mâle A comprend une soupape 4 mobile dans un canal interne 200 de circulation du fluide traversant le corps mâle 2 de part en part le long de l'axe central (X). Le canal interne 200 est délimité par une surface de diamètre réduit d200a réduit au niveau de la queue arrière 24, un diamètre augmenté d200b au niveau de la gorge externe 20, une rainure interne 200c circonférentielle ménagée à partir d'une surface cylindrique 200f s'étendant à l'avant du diamètre d200b et de part et d'autre de la rainure 200c, une surface cylindrique d'embouchure 200e de diamètre réduit située au niveau de l'extrémité avant 22 et une surface tronconique interne 200d s'étendant à partir de la surface cylindrique 200f disposée sur l'avant vis-à-vis de la rainure interne 200c jusqu'à la surface cylindrique d'embouchure 200e. Le diamètre d200a de la surface arrière 200a est inférieur au diamètre interne minimal d200e de la surface cylindrique d'embouchure 200e.

La soupape 4 est formée d'au moins quatre pièces ou composants, incluant une pièce avant 40, une pièce arrière 42, un ou des organes de liaison, et un joint d'étanchéité 46. En particulier la pièce avant 40, la pièce arrière 42 et le ou les organes de liaison sont des pièces distinctes. La pièce avant 40, la pièce arrière 42 sont des pièces de révolution.

Un ressort 48 est engagé entre une surface d'appui 26 sur le corps mâle 2 et un appui 420 sur la pièce arrière 42. La pièce arrière 42 est munie d'un orifice axial 422 et d'orifices radiaux 424 permettant le passage du fluide dans la soupape 4 en configuration d'ouverture. L'orifice axial 422 est entouré d'une paroi cylindrique autour de laquelle le ressort 48 est engagé.

La pièce avant 40, la pièce arrière 42, et le ressort 48 ont un diamètre externe maximal qui est inférieur au diamètre interne minimal d200e de la surface cylindrique d'embouchure 200e, de manière à pouvoir être montés par l'avant du corps mâle 2.

Les organes de liaison sont formés par des billes 44, au nombre de trois et réparties de façon régulière autour de l'axe central X du raccord R.

La pièce arrière 42 comprend une extrémité 426 de diamètre réduit munie d'une gorge externe 426a circonférentielle. La pièce avant 40 présente un alésage 400 de diamètre supérieur au diamètre externe de l'extrémité 426 de diamètre réduit, et des logements 402 radiaux traversants débouchant dans l'alésage 400. En configuration montée de la soupape 4 dans le corps mâle 2, l'extrémité 426 de diamètre réduit est engagée dans l'alésage 400 et les billes de liaison 44 sont en prise dans les logements 402 et disposées radialement à l'extérieur de l'extrémité 426 de diamètre réduit. La pièce avant 40 et la pièce arrière 42 sont en butée axiale l'une contre l'autre par contact direct au niveau d'une surface axiale 41 de la pièce avant 40 et d'une surface axiale 421 de la pièce arrière 42.

Le diamètre de chacune des billes de liaison 44, qui correspond à leur hauteur radiale sur les figures 1 et 2, est inférieur au diamètre interne minimal d200e de la surface cylindrique interne d'embouchure 200e, et en particulier à la moitié du diamètre interne minimal d200e de la surface cylindrique interne d'embouchure 200e. Cela permet aux trois billes de liaison 44 d'être introduites dans le corps mâle 2 par l'avant de celui-ci.

Le joint d'étanchéité 46 est monté dans une gorge externe 404 circonférentielle de la pièce avant 40 et coopère avec la surface cylindrique d'embouchure 200e en configuration de fermeture du canal interne 200 pour une étanchéité entre la pièce avant 40 et le corps mâle 2 dite « radiale ».

L'extrémité 426 munie de la gorge externe 426a se termine vers l'avant par une surface finale qui est une surface tronconique 426b dont le rayon diminue en direction de l'avant de l'élément mâle A. L'angle au sommet α de la surface tronconique 426b est de préférence de 90°.

Lorsque la soupape 4 est en position de fermeture du canal interne 200, représentée à la figure 1, la rainure interne 200c du corps mâle 2 est décalée axialement vers l'arrière du corps mâle 2 par rapport aux organes de liaison 44.

Dans cette position d'obturation de passage du fluide, les billes de liaison 44 sont en butée axiale contre la surface tronconique 200d et en prise dans la gorge externe 426a.

Entre la gorge externe 426a et la surface tronconique 426b, l'extrémité 426 comprend une collerette 426c formant une protubérance radiale par rapport à la gorge externe 426a.

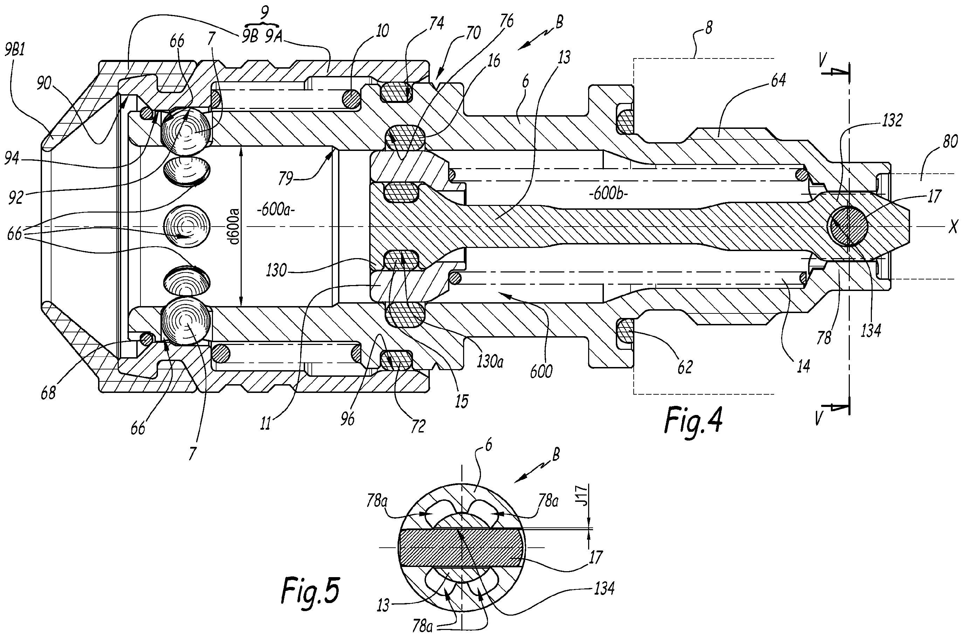

L'élément femelle B est représenté sur les figures 4 et 5. L'élément femelle B comprend un corps femelle 6 qui délimite une cavité interne 600 de révolution traversant le corps femelle 6 d'avant en arrière. La cavité interne 600 délimite une partie d'accueil 600a du corps mâle 2 formant une partie avant de la cavité interne 600 et un canal d'écoulement du fluide 600b lorsque le raccord R est en configuration accouplée, le canal d'écoulement 600b formant une partie arrière de la cavité interne 600. La partie d'accueil 600a forme également une embouchure du corps femelle 6.

Le corps femelle 6 est vissé dans le bloc de levier de frein 8 de cycle dont un conduit interne 80 communique fluidiquement avec la cavité interne 600. Un joint d'étanchéité frontal 62 assure l'étanchéité entre le corps femelle 6 et le bloc de levier de frein 8. Le corps femelle 6 comprend un filetage externe 64 permettant le vissage du corps femelle 6 dans le bloc de levier de frein 8. En variante, le corps femelle 6 est vissé dans un étrier E de freinage de cycle dont un conduit interne communique fluidiquement avec la cavité interne 600.

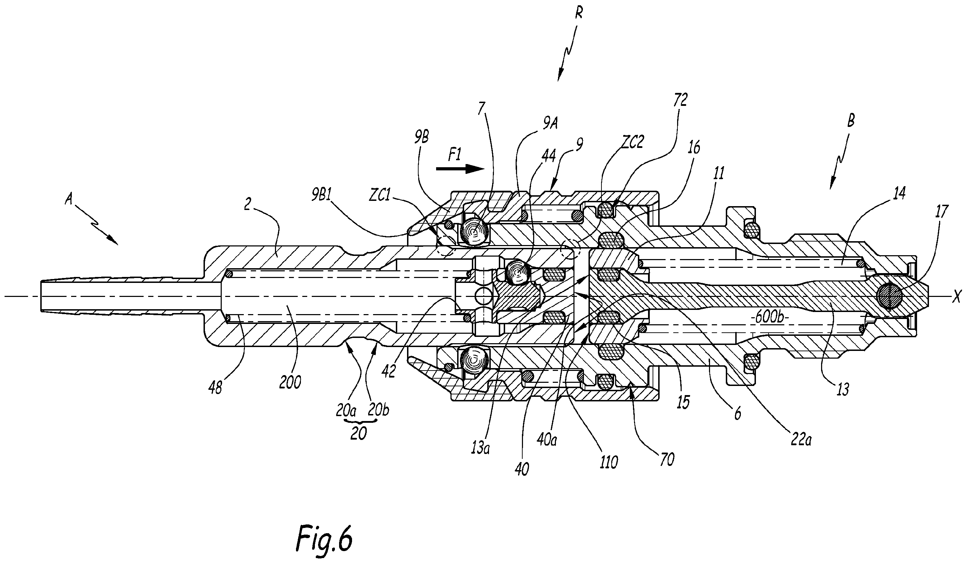

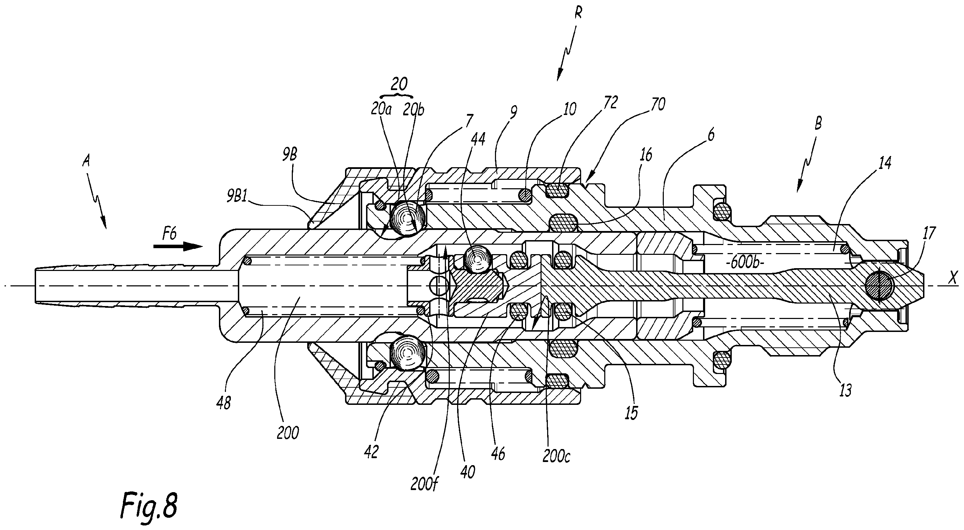

Le corps femelle 6 comprend des logements 66 radiaux traversants pour des billes de verrouillage 7 de l'élément mâle A dans l'élément femelle B. Les billes de verrouillage 7 sont mobiles radialement dans les logements 66 entre une position de verrouillage, représentée aux figures 5 et 8, dans laquelle les billes de verrouillage 7 font partiellement saillie dans le conduit interne 600 et bloquent le passage du corps mâle 2 dans le corps femelle 6, et une position de déverrouillage représentée à la figure 6, dans laquelle les billes de verrouillage 7 ne font plus saillie dans le conduit interne 600 et libèrent le passage pour le corps mâle 2 dans le corps femelle 6. Cet aspect sera développé plus précisément dans la suite. La géométrie des logements 66 est telle que les billes de verrouillage 7 sont retenues dans les logements 66 dans leur mouvement radial vers l'intérieur.

L'élément femelle B comprend également une bague de verrouillage 9, comprenant un corps métallique 9A et un corps en polymère 9B clipsé sur le corps métallique 9A à l'avant de celui-ci. Le corps métallique 9A délimite une encoche interne avant 90 circonférentielle et une encoche interne arrière 92 circonférentielle, séparées axialement par un rebord interne 94 circonférentiel. L'encoche interne avant 90 a un diamètre supérieur au diamètre de l'encoche interne arrière 92. Le rebord interne 94 a un diamètre inférieur au diamètre interne de l'encoche interne arrière 92 et au diamètre de l'encoche interne avant 90. Autrement dit l'encoche interne avant 90 est plus profonde vis-à-vis du rebord interne 94 que l'encoche interne arrière 92. La bague de verrouillage 9 est repoussée vers l'avant de l'élément femelle B, en position avancée en butée contre un jonc d'arrêt 68, par un ressort 10 interposé entre la bague de verrouillage 9 et le corps femelle 6. En position avancée représentée à la figure 4, la bague de verrouillage 9 laisse apparente une marque 70 apposée sur la surface externe du corps femelle 6. La marque 70, lorsqu'elle est visible, permet de signaler la position avancée de la bague de verrouillage 9.

Le corps polymère 9B présente une lèvre 9B1 dirigée vers l'avant et vers l'axe X et qui protège le corps femelle 6 en configuration désaccouplée du raccord R.

Un joint torique 72 limite les entrées de pollutions entre la bague de verrouillage 9 et le corps femelle 6. Le joint 72 est monté dans une gorge 74 du corps femelle 6 et coopère avec une surface interne 96 du corps métallique 9A.

L'élément femelle B comprend un tiroir 11 mobile dans la cavité interne 60 autour d'un piston 13 central s'étendant selon l'axe X et monté sur le corps femelle 6. Le tiroir 11 est repoussé en butée contre une pièce avant évasée 130 du piston 13 par un ressort 14 en appui contre le corps femelle 6. La pièce avant évasée 130 comprend un logement radial externe 130a dans lequel est logé un joint d'étanchéité 15. Le joint 15 assure l'étanchéité entre la pièce avant évasée 130 et une surface interne du tiroir 11. Un second joint d'étanchéité 16 est logé dans une gorge interne 76 du corps femelle 6 et assure l'étanchéité entre le corps femelle 6 et une surface externe du tiroir 11. Les joints 15 et 16 assurent l'étanchéité entre le corps femelle 6, le tiroir 11 et la pièce avant évasée 130 lorsque le tiroir 11 est en position de fermeture du canal d'écoulement 600b, c'est-à-dire en butée sur l'avant contre la partie évasée 130.

Le piston central 13 muni du joint 15, le ressort 14 et le tiroir 11 sont montés dans le corps femelle 6 par le côté avant, du côté de l'embouchure 600a du corps femelle 6. Le piston 13, le tiroir 11 et le ressort 14 ont un diamètre externe maximal qui est inférieur au diamètre interne minimal d600a de l'embouchure 600a du corps femelle 6. Le piston central 13 comprend une partie arrière 132 solidarisée avec le corps femelle 6 dans une partie cylindrique 78 de diamètre réduit située à l'arrière du corps femelle 6. La partie arrière 132 est liée à la partie cylindrique arrière 78 par une goupille transversale 17 qui traverse le corps femelle 6 et le piston central 13. La goupille 17 est montée serrée sans jeu dans le corps femelle 6, tandis qu'un jeu axial J17, de l'ordre de 0,1 à 0,5 mm, existe entre la goupille 17 et un logement 134 de la partie arrière 132, recevant la goupille 17, comme cela est visible à la figure 5. Le piston central 13 est donc solidaire du corps femelle 6, au jeu axial J17 près. Le piston central 13 est de diamètre externe variable sur sa longueur le long de l'axe X.

Le tiroir 11 forme une soupape mobile dans le corps femelle 6 le long de l'axe central X. Le piston central 13 est monté par sa partie arrière 132 au niveau d'un logement quadrilobé 78a de la partie cylindrique arrière 78, permettant un passage maximal de fluide entre le canal 600b et le conduit interne 80 autour de la partie arrière 132.

L'accouplement du raccord R se déroule de la façon suivante, en référence aux figures 6 à 8. Un opérateur introduit l'élément mâle A dans l'élément B en alignant l'élément mâle A et l'élément femelle B selon l'axe central X et en insérant le corps mâle 2 dans la partie avant 600a de la cavité interne 600. Dans le même temps, l'opérateur déplace la bague de verrouillage 9 vers l'arrière, selon la flèche F1. La bague de verrouillage 9 vient en position rétractée en butée contre le corps mâle 2 et la lèvre 9B1 est déformée vers l'extérieur. La marque 70 est alors cachée par le corps métallique 9A. L'encoche interne avant 90 est alignée avec les billes de verrouillage 7. Lors de son introduction dans l'élément femelle B, le corps mâle 2 est doublement guidé avec le corps femelle 6 par la prise de guidage quasi simultanée au niveau de deux zones de guidage cylindriques ZC1 et ZC2, formées par deux surfaces cylindriques internes de la cavité interne 600 décalées axialement et radialement, respectivement complémentaires de deux surfaces cylindriques du corps mâle 2 décalées axialement et radialement.

Lors de l'introduction de l'élément mâle A dans l'élément femelle B, la soupape 4 parvient au contact du piston central 13, et simultanément le corps mâle 2 parvient au contact du tiroir 11. La soupape 4 est repoussée dans le canal interne 200 en tant qu'ensemble. Le contact entre le corps mâle 2 et le tiroir 11 se fait par un contact plan entre une surface axiale plane 22a de l'extrémité avant 22, et une surface axiale plane 110 du tiroir 11. Le contact entre la soupape 4 et le tiroir 13 se fait entre une surface axiale plane 40a de la pièce avant 40, et une surface axiale plane opposée 13a du tiroir 13.

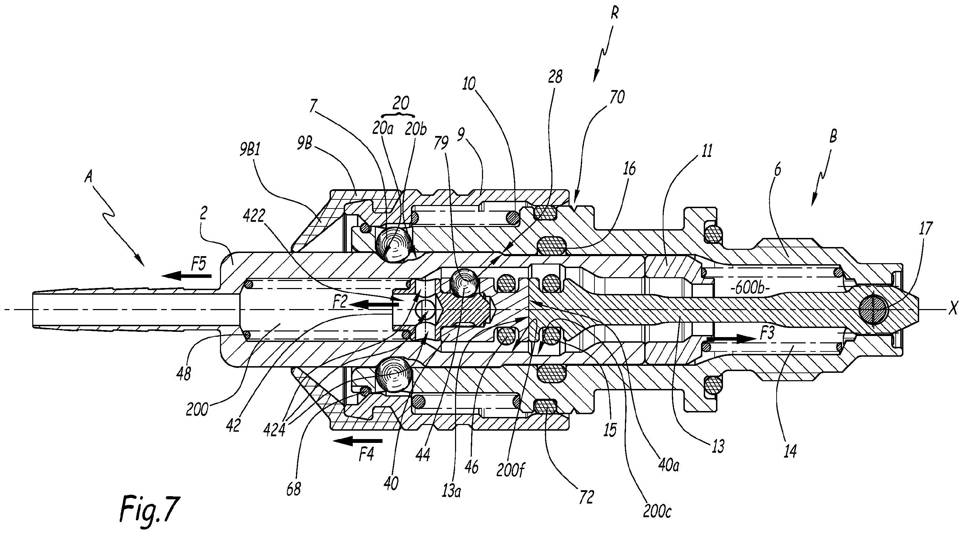

La poursuite du mouvement d'emmanchement de l'élément mâle A dans l'élément femelle B, représentée à la figure 7, repousse respectivement la soupape 4 et le tiroir 11 dans le canal interne 200 et dans le canal 600b, selon les flèches F2 et F3, jusqu'à ce que les joints 46 et 15 perdent respectivement l'étanchéité avec le corps mâle 2 et le tiroir 11. Dans cette configuration, l'étanchéité est réalisée entre le corps mâle 2 et le corps femelle 6 au niveau du joint 16. La soupape 4 et le tiroir 11 sont en configuration d'ouverture. La circulation du fluide entre l'élément mâle A et l'élément femelle B est alors possible, via le canal 200, les orifices 422 et 424, l'espace créé entre le piston 30 et la surface interne du tiroir 11 et le canal 600b.

Les billes de liaison 44 suivent le mouvement de la soupape 4 au cours de l'accouplement et sont mobiles avec la soupape 4 dans le canal interne 200, entourées par la surface cylindrique 200f qui présente un diamètre interne inférieur au diamètre interne de la rainure 200c, puis se retrouvent alignées radialement avec la rainure interne 200c et enfin, en poursuivant leur mouvement dans le canal interne 200 lors de la poursuite de l'introduction de l'élément mâle A, de nouveau entourées par la surface cylindrique 200f. En configuration accouplée du raccord R, les billes de liaison 44 sont alignées radialement avec la surface cylindrique 200f et décalées par rapport à la rainure interne 200c.

Le mouvement d'emmanchement de l'élément mâle A vers l'arrière de l'élément femelle B est poursuivi jusqu'au moment où le corps mâle 2 arrive axialement en butée contre le corps femelle 6, au niveau de surfaces de butée coopérantes 28 et 79, respectivement du corps mâle 2 et du corps femelle 6.

Lors de l'introduction de l'élément mâle A, les billes de verrouillage 7 sont repoussées radialement par le corps mâle 2 vers l'extérieur dans leur position de déverrouillage dans l'encoche interne avant 90, qui est alignée radialement avec les billes 7 par le retrait vers l'arrière de la bague de verrouillage 9 par l'opérateur. Lorsque le corps mâle 2 arrive en butée axiale contre le corps femelle 6, dans une configuration intermédiaire de l'accouplement, les billes de verrouillage 7 sont alignées radialement avec la portion arrière 20a de la gorge externe étagée 20. L'opérateur relâche la bague de verrouillage 9, qui est alors repoussée par le ressort 10 vers sa position avancée contre le jonc d'arrêt 68, selon la flèche F4, avec la lèvre 9B1 qui se déforme au contact du corps mâle 2. Le rebord interne 94 repousse les billes de verrouillage 7 radialement vers l'intérieur dans la gorge externe étagée 20, au niveau de la portion arrière 20a, dans une position radiale interne où les billes de verrouillage 7 n'interfèrent pas axialement avec le rebord interne 94 et autorisent le déplacement de la bague de verrouillage vers sa position avancée. L'encoche arrière 92 parvient alors en regard radial des billes de verrouillage 7. Le corps mâle 2, relâché par l'opérateur, est alors repoussé vers l'avant de l'élément femelle B selon la flèche F5 par la pression exercée par le fluide, et/ou par les ressorts 48 et 14, dont l'action est exercée par l'intermédiaire du tiroir 11 et de la soupape 4. Les billes de verrouillage 7 sont écartées radialement par la portion avant 20b de la gorge étagée 20, dans l'encoche arrière 92, dans la configuration de la figure 8, qui correspond à la configuration accouplée du raccord R. La marque 70 est alors visible, marquant la configuration accouplée du raccord. En configuration accouplée, les billes de verrouillage 7 en position de verrouillage bloquent le corps mâle 2 dans le corps femelle 6 en s'opposant au retrait du corps mâle 2 hors du corps femelle 6. Les billes de verrouillage 7 sont radialement intercalées entre la portion avant 20b et l'encoche interne arrière 92 si bien que les billes de verrouillage 7 interfèrent axialement avec le rebord interne 94 et s'opposent au déplacement de la bague de verrouillage 9 jusqu'à sa position rétractée. La position de verrouillage des billes 7 se trouve radialement vers l'intérieur par rapport à leur position de déverrouillage. Du fait du diamètre d20a de la portion avant 20a inférieur au diamètre d20b de la portion arrière 20b, la position de verrouillage des billes 7 se trouve radialement vers l'extérieur par rapport à la position radiale interne dans laquelle les billes de verrouillage 7 coopèrent avec la portion arrière 20a et n'interfèrent pas axialement avec le rebord interne 94. En configuration accouplée du raccord R, la soupape 4 et le tiroir 11 sont en position d'ouverture respectivement du canal interne 200, de la partie arrière 600b de la cavité interne 600. Le tuyau T est raccordé fluidiquement au conduit interne 80 du bloc de levier de frein 8.

Pour désaccoupler le raccord R, la séquence d'opération inverse doit être opérée. L'opérateur doit pousser l'élément mâle A vers l'arrière de l'élément femelle B selon la flèche F6, dans le corps femelle 6, afin d'aligner radialement les billes de verrouillage 7 avec la portion arrière 20a de la gorge étagée 20, de manière à pouvoir repousser les billes de verrouillage 7 radialement vers l'intérieur pour les dégager du rebord interne 94, et permettre la manoeuvre vers l'arrière de la bague de verrouillage 9. L'opérateur actionne alors vers l'arrière la bague de verrouillage 9, et aligne radialement le rebord interne 94 puis l'encoche avant 90 avec les billes de verrouillage 7. Les billes de verrouillage 7 étant alors libres d'être repoussées vers l'extérieur dans l'encoche avant 90, en position de déverrouillage dans laquelle les billes de verrouillage 7 ne font plus saillie dans le conduit interne 600 et autorisent le retrait du corps mâle 2 hors du corps femelle 6, l'élément mâle A est repoussé par l'action des ressorts 48 et 14. L'élément mâle A est progressivement extrait de l'élément femelle B, et le retour en position de fermeture de la soupape 4 et du tiroir 11 sous l'action respective des ressorts 48 et 14 induit la reprise d'étanchéité des joints 46 et 15 et l'arrêt de la communication fluidique entre l'élément mâle A et l'élément femelle B. Une fois l'élément mâle A complètement extrait par l'opérateur, la bague de verrouillage 9 est ensuite relâchée par l'opérateur et repoussée par le ressort 10 en position avancée. L'élément femelle B est alors prêt pour une nouvelle connexion avec un élément mâle A.

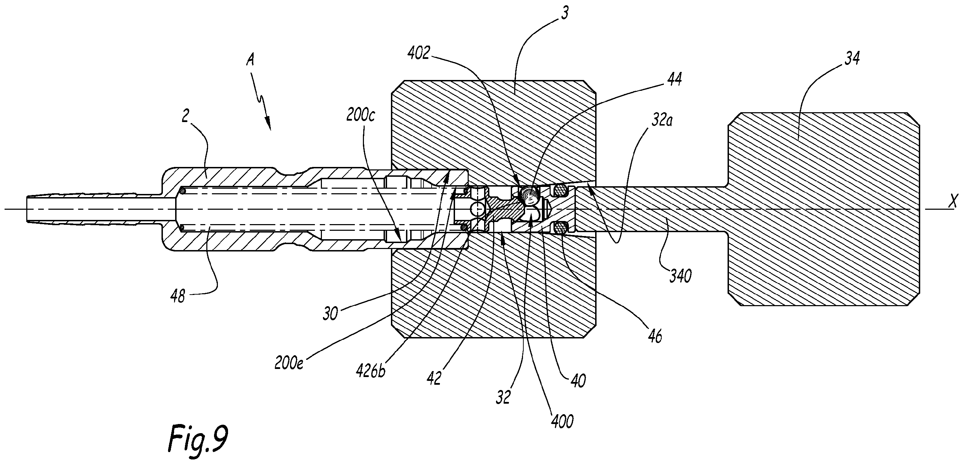

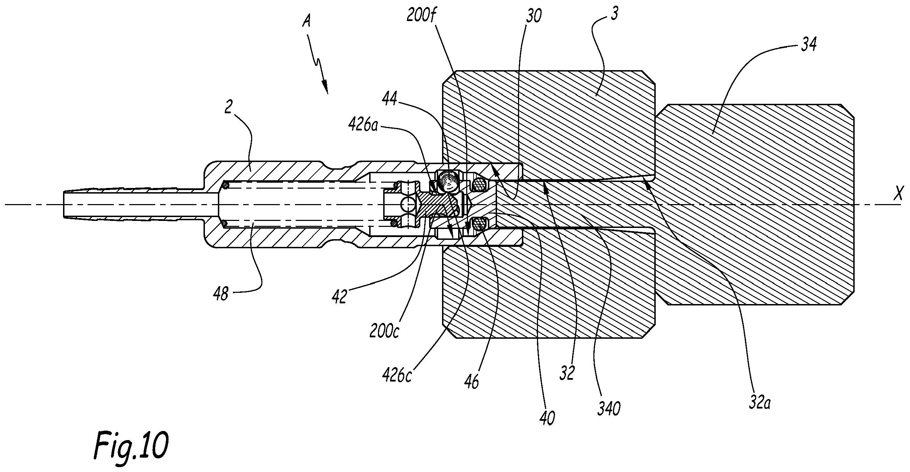

La soupape 4 est montée dans le corps mâle 2 de la manière suivante, représentée sur les figures 9 et 10. Le corps mâle 2 est engagé avec sa surface axiale plane 22a en butée dans un outil 3, qui comprend un premier alésage 30 dont le diamètre correspond au diamètre externe du corps mâle 2, et un second alésage 32 qui prolonge le premier alésage 30 en direction d'une face opposée de l'outil 3. Les alésages 30 et 32 sont centrés sur l'axe central X de l'élément mâle A. Le second alésage 32 présente un diamètre interne correspondant au diamètre interne d200e de la surface cylindrique d'embouchure 200e.

Le ressort 48, puis la pièce arrière 42, sont introduits dans l'alésage 32, qui communique avec le canal interne 200. Puis les trois billes de liaison 44 sont engagées dans les logements 402 de la pièce avant 40, et la pièce avant 40, équipée des billes 44 et du joint 46, est introduite dans le second alésage 32. Les pièce arrière 42 et pièce avant 40 sont donc introduites séparément dans l'alésage 32. L'embouchure de l'alésage 32 du côté opposé au premier alésage 30 présente un profil oblique 32a permettant l'écrasement progressif du joint 46.

La pièce arrière 42 et la pièce avant 40, avec la surface tronconique 426b en butée contre les billes de liaison 44, sont poussées, par un autre outil 34 présentant une tige 340 de diamètre correspondant à celui du second alésage 32, dans le corps mâle 2 à l'encontre de l'effort du ressort 48, à travers l'embouchure de l'extrémité avant 22 du corps mâle 2 et le volume interne délimité par la surface d'embouchure 200e jusqu'à ce que les billes de liaison 44 soient alignées radialement avec la rainure interne 200c, dans la configuration de la figure 10. A ce moment, les outils 3 et 34 sont en butée. Les billes de liaison 44 ont alors été écartées radialement dans la rainure 200c par la surface tronconique 426b et par la collerette 426c et, sous l'action du ressort 48, la pièce arrière 42 est repoussée vers l'avant du corps mâle 2 de telle manière que les billes 44 viennent se loger dans la gorge 426a de la pièce arrière 42. On atteint la configuration montée de la soupape dans le corps mâle 2. La somme du rayon externe R426c de la collerette 426c et de la dimension radiale h44, c'est-à-dire du diamètre des billes de liaison 44, est inférieure au rayon R200c de la rainure interne 200c, ce qui permet aux billes de liaison 44 de franchir la collerette 426c avant de s'engager dans la gorge 426a, et est supérieure au rayon interne de la surface cylindrique 200f, ce qui permet que les billes de liaison 44 soient maintenues en prise dans la gorge externe 426a lorsque les billes de liaison 44 sont décalées axialement de la rainure interne 200c. La différence entre le rayon R200c et le rayon externe maximal de la pièce avant 40 au niveau des logements 402 est inférieure à la dimension radiale h44 des billes de liaison 44, si bien que les billes de liaison 44 ne peuvent sortir des logements 402 lorsque la soupape 4 est en configuration montée dans le canal interne 200. La somme du rayon de la gorge externe 426a et de la dimension radiale h44 des billes de liaison 44 est supérieure à la moitié du diamètre d200e, ce qui permet aux billes de liaison 44 de réaliser la butée axiale de la soupape 4 contre la surface tronconique interne 200d du corps mâle 2 lorsque la soupape 4 est en position d'obturation du canal interne 200, mais est inférieure au rayon de la surface cylindrique 200f.

L'outil 34 est retiré de l'alésage 32 et l'ensemble comprenant la pièce avant 42, la pièce arrière 40 et les billes de liaison 44 est repoussé vers l'avant de l'élément mâle A par le ressort 48, les billes de liaison 44 venant en butée contre la surface tronconique 200d et le joint 46 venant en contact étanche avec la surface cylindrique interne d'embouchure 200e. Les billes de liaison 44 assurent la liaison de la soupape 4 avec le corps mâle 2. La pièce arrière 42 est maintenue par le ressort 48 en contact axial contre la pièce avant 40 par contact direct, au niveau des surfaces axiales 41 et 421. La position de fermeture étanche du canal interne 200 est atteinte. Lorsqu'un opérateur enlève l'élément mâle A de l'outil 3 et met en place le tuyau T sur la queue arrière 24, l'élément mâle A est prêt à être accouplé.

En configuration montée de la soupape 4 dans le corps mâle 2, lorsque les billes de liaison 44 sont décalées de la rainure 200c, les billes de liaison 44 forment obstacle à un écartement axial des pièce avant 40 et pièce arrière 42 avec les billes de liaison 44 solidaires axialement de la pièce avant 40 dans les logements 402 et maintenues en interférence axiale avec la collerette 426c de la pièce arrière 42 par la surface cylindrique 200f. Dans cette configuration, les billes 44 sont solidaires axialement de la pièce avant 40 et de la pièce arrière 42.

Le raccord R présente une déconnexion sécurisée par la double manoeuvre nécessaire, qui consiste à repousser l'élément mâle A dans l'élément femelle B puis à rétracter la bague de verrouillage 9. Les deux éléments de raccord R étant équipés de soupapes, il ne se produit pas de fuite au désaccouplement.

Les éléments mâle A et femelle B sont équipés de clapèterie à faces planes. Les surfaces planes 40a et 22a de l'élément mâle A sont alignées axialement en position d'obturation lorsque la soupape 4 est en position de fermeture du canal interne 200, de même que pour les surfaces planes 110 et 13a lorsque le tiroir 11 est en position de fermeture du conduit interne 600, de sorte qu'il ne se forme pas de volume susceptible de retenir du fluide entre l'élément mâle A et l'élément femelle B au cours du fonctionnement du raccord R. Il ne se produit donc pas d'égouttures au désaccouplement.

La soupape 4 formée de plusieurs pièces peut être montée par l'avant de l'élément mâle A. En particulier, la pièce avant 40, la pièce arrière 42, les billes de liaison 44 sont introduites dans le canal interne 200 de l'élément mâle A par l'embouchure du corps mâle 2 au niveau de l'extrémité avant 22 de l'élément mâle A.

Le montage de la soupape 4 par l'avant de l'élément mâle A permet de fabriquer le corps mâle 2 d'un seul bloc incluant la queue arrière 24 et d'obtenir un passage de fluide maximal dans un encombrement extérieur minimal.

Les organes de liaison formés par les billes de liaison 44 permettent un impact réduit sur le passage du fluide et un centrage satisfaisant de la soupape 4 dans le corps mâle 2.

La position de fermeture de la soupape 4 est sécurisée par le contact direct axial entre la pièce arrière 42 et la pièce avant 40, et par le décalage axial qui existe entre la rainure interne 200c et les billes de liaison 44 en configuration d'obturation de la soupape 4.

Le contact axial direct entre la pièce arrière 42 et la pièce avant 40 limite les mouvements radiaux des billes de liaison 44 dans les logements 402 lors du déplacement de la soupape 4 dans le corps mâle 2, notamment lorsque les billes de liaison 44 sont alignées radialement avec la rainure 200c.

Le joint 46 qui assure l'étanchéité entre la soupape 4 et le corps mâle 2 assure une étanchéité radiale, ce qui augmente la section de passage de fluide par rapport à une étanchéité frontale.

La coopération de la soupape 4 avec un système de piston central 13 et du tiroir 11 avec le corps mâle 2 permet de garantir la position axiale de la soupape 4 et du tiroir 11 respectivement dans le canal interne 200 et dans la cavité interne 600 en configuration accouplée, ce qui garantit un passage de fluide maximal.

Le montage par l'avant du piston central13 et du tiroir 11, et la solidarisation du piston 13 au corps femelle 6 par la goupille 17 permet de fabriquer le corps femelle 6 d'un seul bloc, de dimensions radiales réduites et un passage de fluide maximal dans un encombrement extérieur minimal.

Le double guidage au niveau des deux zones de guidage cylindriques ZC1 et ZC2 en cours d'accouplement et la butée du corps mâle 2 contre le corps femelle 6 en course maximale d'accouplement favorisent l'ergonomie d'accouplement.

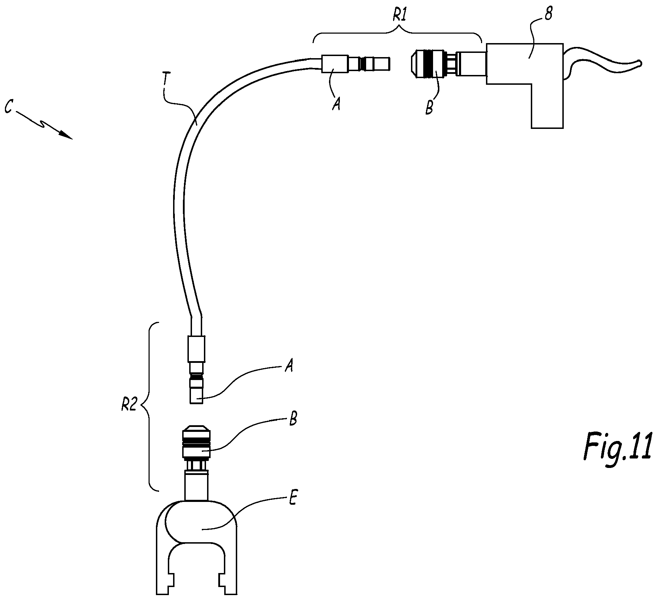

La figure 11 représente partiellement un circuit hydraulique de freinage C pour cycle incluant l'étrier E et le bloc de levier de frein 8. A la figure 11, le circuit est représenté déconnecté et le tuyau T est partiellement représenté. Le tuyau T ou durite assure une liaison fluidique entre l'étrier E et le bloc de levier de frein 8. Le circuit C inclut deux raccords R1 et R2 conformes à l'invention pour le raccordement du tuyau T avec un conduit interne de l'étrier E et avec le conduit interne 80 du bloc de levier de frein 8. Lorsque les raccords R1 et R2 sont en configuration accouplée, le fluide de freinage, en particulier de l'huile, est poussé depuis le bloc de levier de frein 8 dans le circuit hydraulique C en direction de l'étrier E afin d'actionner des mâchoires de frein agissant sur un disque de freinage du cycle pour faire décélérer le cycle.

Dans les raccords R1 et R2, l'élément femelle B, qui est plus encombrant radialement, est placé de manière avantageuse sur l'extrémité du conduit interne de l'étrier E ou l'extrémité du conduit interne 80 du bloc de levier de frein 8, tandis que l'élément mâle A, moins encombrant, équipe chacune des deux extrémités du tuyau T. En variante non représentée, le circuit C peut comprendre un seul raccord R opérant la connexion entre le tuyau T et l'étrier de frein E ou entre le tuyau T et le bloc de freinage 8, un autre raccordement étant prévu pour l'autre extrémité du tuyau T et l'élément correspondant du circuit de freinage.

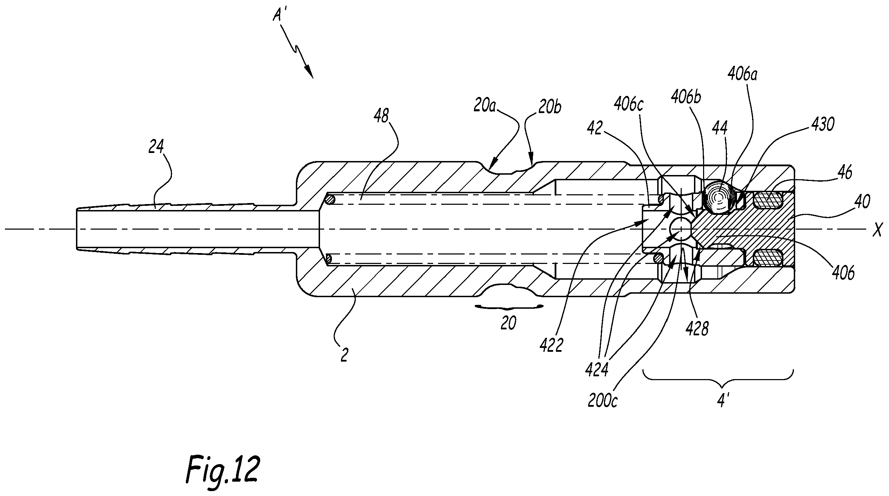

Un second mode de réalisation de l'invention est représenté sur la figure 12. Dans ce mode de réalisation, les éléments communs au premier mode de réalisation portent les mêmes références et fonctionnent de la même manière. Seules les différences sont détaillées ci-après.

Dans ce mode de réalisation, l'élément mâle A' comprend une soupape 4' dont la structure est inversée par rapport à celle de la soupape 4. La pièce de la soupape 4' munie de la gorge externe qui coopère avec les billes de liaison 44 est la pièce avant 40, tandis que la pièce munie des logements radiaux pour les billes 44 est la pièce arrière 42. La pièce avant 40 présente une extrémité arrière 406 de diamètre réduit présentant, de manière semblable à l'extrémité 426 du premier mode de réalisation, une gorge externe 406a, une collerette 406b, et une surface tronconique 406c dont le diamètre se réduit en direction de l'arrière de l'élément mâle A'. Un alésage 428 et des logements radiaux traversants 430 sont ménagés dans la pièce arrière 42. L'alésage 428 prolonge l'orifice axial 422 et reçoit l'extrémité arrière 406. Les billes de liaison 44 sont logées dans les logements 430 et dans la gorge externe 406a en configuration montée de la soupape 4' dans le corps mâle 2.

Le processus de montage de la soupape 4' dans le corps mâle 2 est dans ce cas identique à celui représenté sur les figures 9 et 10, à la différence que les billes de liaison 44 sont montées dans leurs logements 430 et insérées avec la pièce arrière 42 dans le corps mâle 2, préalablement à l'insertion de la pièce avant 40 dans le corps mâle 2. Ensuite, les billes de liaison 44 sont engagées dans la gorge 406a sous l'action conjointe du ressort 48, de la surface tronconique 406c et de l'engagement de la pièce avant 40 avec la pièce arrière 42 selon un principe similaire à celui décrit précédemment.

Selon un mode de réalisation non représenté, les organes de liaison entre la pièce avant 40 et la pièce arrière 42 peuvent être différents des billes 44, par exemple des segments arqués ou un jonc fendu.

Selon un mode de réalisation non représenté, la pièce avant et la pièce arrière peuvent être solidarisées axialement par vissage ou par emmanchement à force l'une dans l'autre. Dans ce cas, l'encoche et la collerette peuvent être omises sur l'extrémité de diamètre réduit, les logements pour le ou les organes de liaison peuvent être omis, la surface externe de l'extrémité de diamètre réduit coopérant radialement avec le ou les organes de liaison.

Selon un mode de réalisation non représenté, la soupape 4 est formée d'une pièce avant 40, une pièce arrière 42, des organes de liaison, et un ressort 48, le joint 46 étant logé sur le corps mâle au niveau de la surface cylindrique d'embouchure 200e.

Le raccord a été décrit en application avec le freinage de cycle mais peut être mis en oeuvre pour la connexion fluidique pour air respirable ou pour toute autre fluide requérant une manoeuvre de désaccouplement sécurisée et un encombrement limité.

## Revendications

1. Raccord (R) fluidique comprenant un élément mâle (A) et un élément femelle (B) complémentaire de l'élément mâle (A) destinés s'emmancher l'un dans l'autre selon un axe central (X) du raccord (R),
- l'élément mâle (A; A') comprenant un corps mâle (2) définissant un canal interne (200) de circulation de fluide, le corps mâle (2) étant muni d'une gorge externe étagée (20) circonférentielle avec une portion avant (20b) et une portion arrière (20a) adjacentes selon l'axe central (X), le diamètre (d20b) de la portion avant (20b) étant supérieur au diamètre (d20a) de la portion arrière (20a), et
- l'élément femelle (B) comprenant :
- un corps femelle (6) délimitant une cavité interne (600) avec une partie avant (600a) apte à recevoir le corps mâle (2),
- des billes de verrouillage (7) mobiles radialement dans un logement (66) du corps femelle (6), entre une position de verrouillage du corps mâle (2) dans le corps femelle (6) dans une configuration accouplée du raccord (R) et une position de déverrouillage dans laquelle les billes de verrouillage (7) autorisent le retrait du corps mâle (2) hors du corps femelle (6);
- une bague de verrouillage (9) munie d'une encoche interne avant (90) circonférentielle et d'une encoche interne arrière (92) circonférentielle séparées axialement par un rebord interne (94) circonférentiel, la bague de verrouillage (9) étant mobile entre une position avancée, où l'encoche interne arrière (92) maintient les billes de verrouillage (7) en position de verrouillage, et une position rétractée, où l'encoche interne avant (90) est alignée radialement avec les billes de verrouillage (7) de manière que les billes de verrouillage (7) puissent atteindre leur position de déverrouillage,
- un ressort (10) qui repousse la bague de verrouillage (9) en position avancée,
- une soupape (11) mobile dans le corps femelle (6) entre une position d'ouverture et une position de fermeture d'une partie arrière (600b) de la cavité interne (600) et repoussée par un ressort (14) vers sa position de fermeture,
- lorsque les billes de verrouillage (7) coopèrent avec la portion avant (20b) de la gorge externe étagée (20) du corps mâle (2) emmanché dans le corps femelle (6), les billes de verrouillage (7) forment obstacle au rebord interne (94) de la bague de verrouillage (9) selon l'axe central (X), lorsque les billes de verrouillage (7) coopèrent avec la portion arrière (20a) de la gorge externe étagée (20), les billes de verrouillage (7) sont aptes à se dégager vis-à-vis du rebord interne (94),
- en configuration accouplée du raccord (R), les billes de verrouillage (7) sont en prise avec la portion avant (20b) de la gorge externe étagée (20) et avec l'encoche interne arrière (92);
le raccord (R) étant **caractérisé en ce que** l'élément mâle (A; A') comprend une soupape (4; 4') mobile dans le canal interne (200) du corps mâle (2) entre une position d'ouverture et une position de fermeture du canal interne (200) et un ressort (48) qui repousse la soupape (4) de l'élément mâle (A) vers sa position de fermeture,
**en ce que** la soupape (4; 4') de l'élément mâle (A) est formée d'une pièce avant (40), d'une pièce arrière (42) et d'au moins un organe de liaison (44) qui sont des pièces distinctes, l'organe de liaison (44) étant apte à venir en butée axiale contre une surface interne (200d) du canal interne (200) lorsque la soupape (4) de l'élément mâle (A) est en position de fermeture du canal interne (200),
et **en ce que** les dimensions radiales maximales de la pièce avant (40), de la pièce arrière (42) et de l'organe de liaison (44) sont inférieures au diamètre interne minimal (d200e) d'une surface cylindrique d'embouchure (200e) du canal interne (200) de l'élément mâle (A), de manière que la pièce avant (40), la pièce arrière (42) et l'organe de liaison (44) puissent être introduits dans le canal interne (200) de l'élément mâle (A) par l'avant du corps mâle (2).

2. Raccord selon la revendication 1, **caractérisé en ce que** l'une parmi la pièce avant (40) et la pièce arrière (42) de la soupape (4) de l'élément mâle (A) présente une extrémité (426 ; 406) de diamètre réduit engagée dans un alésage (400 ; 428) de l'autre parmi la pièce arrière (42) et la pièce avant (40), l'organe de liaison (44) étant disposé radialement à l'extérieur de l'extrémité (426 ; 406) de diamètre réduit.

3. Raccord selon la revendication 2, **caractérisé en ce que** l'extrémité (426 ; 406) de diamètre réduit est munie d'une gorge externe (426a ; 406a) et d'une collerette (426c ; 406b) disposée axialement entre la gorge externe (426a ; 406a) et une surface finale (426b ; 426c) de l'extrémité de diamètre réduit, **en ce que** le canal interne (200) comporte une rainure interne (200c) circonférentielle dont le rayon (R200c) est supérieur ou égal à la somme du rayon externe (R426c) de la collerette (426c) et de la dimension radiale (h44) de l'organe de liaison (44) et **en ce que** la pièce (40, 42) de la soupape (4) avec alésage (400 ; 428) présente des logements radiaux (402 ; 430) traversants débouchant dans l'alésage (400 ; 428), l'organe de liaison (44) étant en prise dans les logements radiaux (402) et dans la gorge externe (426a) lorsque les billes de liaison (44) sont décalées axialement de la rainure interne (200c).

4. Raccord selon la revendication 3, **caractérisé en ce que** la rainure interne (200c) du corps mâle (2) est décalée axialement par rapport aux organes de liaison (44) lorsque la soupape (4, 4') de l'élément mâle (A, A') est en position de fermeture du canal interne (200).

5. Raccord selon l'une des revendications 3 et 4, **caractérisé en ce que** la pièce de la soupape (4) munie de la gorge externe (426a) est la pièce arrière (42), alors que la pièce munie des logements radiaux (402) est la pièce avant (40), et **en ce que** le ressort (48) de l'élément mâle (A) repousse la pièce arrière (42) en contact axial avec la pièce avant (40).

6. Raccord selon l'une des revendications 2 à 5, **caractérisé en ce que** l'extrémité (426 ; 406) de diamètre réduit se termine par une surface tronconique (426b ; 406c), dont l'angle au sommet (a) est de préférence de 90°.

7. Raccord selon l'une des revendications précédentes, **caractérisé en ce que** le corps mâle (2) est formé d'une seule pièce et **en ce que** le diamètre interne (d200a) du canal interne (200) au niveau d'une queue arrière (24) du corps mâle (2) est inférieur au diamètre interne minimal (d200e) de la surface cylindrique d'embouchure (200e) du canal interne (200).

8. Raccord selon l'une des revendications précédentes, **caractérisé en ce que** la pièce arrière (42) de la soupape (4) de l'élément mâle (A ; A') comprend des orifices radiaux (424) et un orifice axial (422) de passage du fluide ainsi qu'un logement (420) pour le ressort (48) repoussant la soupape (4) de l'élément mâle (A ; A') vers sa position de fermeture du canal interne (200).

9. Raccord selon l'une des revendications précédentes, **caractérisé en ce que** l'organe de liaison est formé par des billes (44), de préférence trois billes régulièrement réparties autour de l'axe central (X) du raccord (R).

10. Raccord selon l'une des revendications précédentes, **caractérisé en ce que** la soupape de l'élément femelle (B) comprend un tiroir (11) mobile en translation dans la partie arrière (600b) de la cavité interne (600) du corps femelle (6) autour d'un piston central (13) logé dans le corps femelle (6), le tiroir (11) étant adapté pour coopérer axialement avec le corps mâle (2) par un contact entre une face plane (110) du tiroir (11) et une face plane (22a) du corps mâle (2), le piston central (13) étant adapté pour coopérer axialement avec la soupape (4; 4') de l'élément mâle (A) par un contact entre une face plane (13a) du piston central (13) et une face plane (40a) de la soupape (4; 4') de l'élément mâle (A).

11. Raccord selon la revendication 10, **caractérisé en ce que** dans les positions de fermeture respectives de la soupape (4; 4') de l'élément mâle (A; A') et de la soupape (11) de l'élément femelle (B), la face plane (22a) du corps mâle (2) est alignée axialement avec la face plane (40a) de la soupape (4, 4'), et la face plane (110) du tiroir (11) est alignée axialement avec la face plane (13a) du piston (13).

12. Raccord selon l'une des revendications 10 à 11, **caractérisé en ce que** le piston central (13) est solidarisé au corps femelle (6) par une goupille (17) s'étendant transversalement à l'axe central (X) et traversant une partie arrière (132) du piston central (13) et le corps femelle (6).

13. Raccord selon l'une des revendications précédentes, **caractérisé en ce que** l'élément mâle (A; A') comprend un joint d'étanchéité (46) radialement disposé entre la soupape (4; 4') de l'élément mâle et le corps mâle (2) lorsque la soupape (4 ; 4') de l'élément mâle (A ; A') est en position de fermeture du canal interne (200), le joint d'étanchéité (46) étant logé de préférence dans une gorge (404) de la soupape (4; 4').

14. Raccord selon l'une des revendications précédentes, **caractérisé en ce que** le corps femelle (6) comprend une butée axiale (79) apte à coopérer avec le corps mâle (2) pour limiter le mouvement d'emmanchement du corps mâle (2) dans le corps femelle (6).

15. Circuit hydraulique de freinage pour cycle incluant au moins :
- un étrier (E) et un bloc de levier de frein (8),
- un tuyau (T) de liaison fluidique entre l'étrier (E) et le bloc de levier de frein (8), et
- au moins un raccord (R) selon l'une des revendications précédentes pour le raccordement fluidique du tuyau (T) avec l'étrier (E) ou avec le bloc de levier de frein (8).

## Patentansprüche

1. Fluidkupplung (R), die ein Einsteckelement (A) und ein zum Einsteckelement (A) komplementäres Aufnahmeelement (B) umfasst, die vorgesehen sind, gemäß einer Mittelachse (X) der Kupplung (R) ineinander gesteckt zu werden, wobei
- das Einsteckelement (A; A') einen Einsteckkörper (2) umfasst, der einen Innenkanal (200) zur Zirkulation des Fluid begrenzt, wobei der Einsteckkörper (2) mit einer gestuften umfänglichen Außennut (20) mit einem gemäß einer Mittelachse (X) aneinander liegenden vorderen (20b) und hinteren (20a) Abschnitt, wobei der Durchmesser (d20b) des vorderen Abschnittes (20b) größer ist als der Durchmesser (d20a) des hinteren Abschnittes (20a), und
- das Aufnahmeelement (B) umfasst:
- einen Aufnahmekörper (6) der einen inneren Hohlraum (600) mit einem vorderen Teil (600a) begrenzt, der geeignet ist, den Einsteckkörper (2) aufzunehmen,
- Verriegelungskugeln (7), die radial in einem Aufnahmeraum (66) des Aufnahmekörpers (6) zwischen einer Verriegelungsposition des Einsteckkörpers (2) in dem Aufnahmekörper (6) in einer gekoppelten Stellung der Kupplung (R) und einer Entriegelungsposition, in der die Verriegelungskugeln (7) das Zurückziehen des Einstecckörpers (2) aus dem Aufnahmekörper (6) gestatten, beweglich sind;
- eine Verriegelungshülse (9), die mit einer vorderen umfänglichen Innenausnehmung (90) und einer hinteren umfänglichen Innenausnehmung (92) ausgerüstet ist, die axial durch einen umfänglichen Innenrand (94) getrennt sind, wobei die Verriegelungshülse (9) zwischen einer vorgerückten Position, in der die hintere Innenausnehmung (92) die Verriegelungskugeln (7) in der Verriegelungsposition halten, und einer zurückgezogenen Position, in der die vordere Innenausnehmung (90) radial mit den Verriegelungskugeln (7) ausgerichtet ist, derart, dass die Verriegelungskugeln (7) ihre Entriegelungspositionen erreichen können, beweglich ist,
- eine Feder (10), die die Verriegelungshülse (9) in die vorgerückte Position schiebt,
- ein Ventil (11), das in dem Aufnahmekörper (6) zwischen einer Offenstellung und einer Schließstellung eines hinteren Teils (600b) des inneren Hohlraums (600) beweglich ist und von einer Feder (14) in seine Schließstellung gedrückt wird,
- wobei, wenn die Verriegelungskugeln (7) mit dem vorderen Abschnitt (20b) der gestuften Außennut (20) des in den Aufnahmekörper (6) eingesteckten Einsteckkörpers (2) zusammenarbeiten, die Verriegelungskugeln (7) ein Hindernis für den Innenrand (94) der Verriegelungshülse (9) gemäß der Mittelachse (X) bilden, wenn die Verriegelungskugeln (7) mit dem hinteren Abschnitt (20a) der gestuften Außennut (20) zusammenarbeiten, wobei die Verriegelungskugeln (7) geeignet sind, sich gegenüber dem Innenrand (94) zu lösen,
- in der gekoppelten Stellung der Kupplung (R), die Verriegelungskugeln (7) mit dem vorderen Abschnitt (20b) der gestuften Außennut (20) und mit der hinteren Innenausnehmung (92) im Eingriff sind;
wobei die Kupplung (R) **dadurch gekennzeichnet ist, dass** das Einsteckelement (A; A') ein Ventil (4; 4'), das in dem Innenkanal (200) des Einsteckelementes (2) zwischen einer Offenstellung und einer Schließstellung des Innenkanals (200) beweglich ist, und eine Feder (48), die das Ventil (4) des Einsteckelementes (A) in seine Schließstellung drückt, umfasst,
dass das Ventil (4; 4') des Einsteckelementes (A) aus einem Vorderteil (40), einem Rückteil (42) und mindestens einem Verbindungselement (44) gebildet wird, die unterschiedliche Teile sind, wobei das Verbindungselement (44) geeignet ist, in axialen Anschlag gegen eine Innenfläche (200d) des Innenkanals (200) zu kommen, wenn das Ventil (4) des Einsteckelementes (A) in der Schließstellung des Innenkanals (200) ist,
und dass die maximalen radialen Abmessungen des Vorderteils (40), des Rückteils (42) und des Verbindungselementes (44) kleiner als der minimale Innendurchmesser (d200e) einer zylindrischen Einmündungsfläche (200e) des Innenkanals (200) des Einsteckelementes (A) sind, derart dass das Vorderteil (40), das Rückteil (42) und das Verbindungselement (44) in den Innenkanal (200) des Einsteckelementes (A) von der Vorderseite des Einsteckkörpers (2) eingeführt werden können.

2. Kupplung nach Anspruch 1, **dadurch gekennzeichnet, dass** eines der Teile Vorderteil (40) und Rückteil (42) des Ventils (4) des Einsteckelementes (A) ein Ende (426; 406) verringerten Durchmessers aufweist, das in eine Bohrung (400; 428) des anderen Teils Rückteil (42) und Vorderteil (40) eingreift, wobei das Verbindungselement (44) radial außerhalb des Endes (426; 406) verringerten Durchmessers angeordnet ist.

3. Kupplung nach Anspruch 2, **dadurch gekennzeichnet, dass** das Ende (426; 406) verringerten Durchmessers mit einer äußeren Nut (426a; 406a) und einem Flansch (426c; 406b), der axial zwischen der äußeren Nut (426a; 406a) und einer Endfläche (426b; 426c) des Endes verringerten Durchmessers angeordnet ist, versehen ist, dass der Innenkanal (200) eine umfängliche Innennut (200c) aufweist, deren Radius (R200c) größer als die oder gleich der Summe des Außenradius (R426c) des Flanschs (426c) und der radialen Abmessung (h44) des Verbindungselementes (44) ist, und dass das Teil (40, 42) des Ventils (4) mit Bohrung (400; 428) radiale Durchgangsaufnahmeräume (402; 430) auf weist, die in die Bohrung (400; 428) münden, wobei das Verbindungselement (44) in die radialen Aufnahmeräume (402) und in die äußere Nut (426a) eingreift, wenn die Verbindungskugeln (44) axial zu der Innennut (200 c) versetzt sind.

4. Kupplung nach Anspruch 3, **dadurch gekennzeichnet, dass** die Innennut (200c) des Einsteckkörpers (2) axial in Bezug auf die Verbindungselemente (44) versetzt sind, wenn das Ventil (4, 4') des Einsteckelements (A, A') in der Schließstellung des Innenkanals (200) ist.

5. Kupplung nach einem der Ansprüche 3 und 4, **dadurch gekennzeichnet, dass** das Teil des Ventils (4), das mit der äußeren Nut (426a) ausgerüstet ist, das Rückteil (42) ist, während das Teil, das mit den radialen Aufnahmeräumen (402) ausgerüstet ist, das Vorderteil (40) ist und dass die Feder (48) des Einsteckelementes (A) das Rückteil (42) in axialen Kontakt mit dem Vorderteil (40) schiebt.

6. Kupplung nach einem der Ansprüche 2-5, **dadurch gekennzeichnet, dass** das Ende (426; 406) verringerten Durchmessers mit einer kegelstumpfförmige Fläche (426b; 406c) abschließt, deren Scheitelwinkel (a) vorzugsweise 90° ist.

7. Kupplung nach einem der vorhergehenden Ansprüche, **dadurch gekennzeichnet, dass** das Einsteckelement (2) aus einem einzigen Stück gebildet ist und dass der Innendurchmesser (d200a) des Innenkanals (200) an einem hinteren Endstück (24) des Einsteckkörpers (2) kleiner ist als der minimale Innendurchmesser (d200e) der zylindrischen Einmündungsfläche (200e) des Innenkanals (200).

8. Kupplung nach einem der vorhergehenden Ansprüche, **dadurch gekennzeichnet, dass** das Rückteil (42) des Ventils (4) des Einsteckelements (A; A') radiale Öffnungen (424) und eine axiale Öffnung (422) für den Durchgang des Fluids sowie einen Aufnahmeraum (420) für die Feder (48) umfasst, die das Ventil (4) des Einsteckelementes (A; A') in seine Schließstellung des Innenkanals (200) schiebt.

9. Kupplung nach einem der vorhergehenden Ansprüche, **dadurch gekennzeichnet, dass** das Verbindungselement von Kugeln (44) gebildet wird, vorzugsweise von drei Kugeln, die regelmäßig um die Mittelachse (X) der Kupplung (R) verteilt sind.

10. Kupplung nach einem der vorhergehenden Ansprüche, **dadurch gekennzeichnet, dass** das Ventil des Aufnahmeelementes (B) ein translatorisch bewegliches Schubelement (11) in dem hinteren Teil (600b) des inneren Hohlraums (600) des Aufnahmeelementes (6) um einen zentralen Kolben (13) herum, der in dem Aufnahmeelement (6) angeordnet ist, umfasst, wobei das Schubelement (11) angepasst ist, axial mit dem Einsteckkörper (2) durch einen Kontakt zwischen einer ebenen Stirnfläche (110) des Schubelementes (11) und einer ebenen Stirnfläche (22a) des Einsteckkörpers (2) zusammenzuarbeiten, wobei der zentrale Kolben (13) angepasst ist, axial mit dem Ventil (4; 4') des Einsteckelements (A) durch einen Kontakt zwischen einer ebenen Stirnfläche (13a) des zentralen Kolbens (13) und einer ebenen Stirnfläche (40a) des Ventils (4; 4') des Einsteckelements (A) zusammenzuarbeiten.

11. Kupplung nach Anspruch 10, **dadurch gekennzeichnet, dass** in den jeweiligen Schließstellungen des Ventils (4; 4') des Einsteckelementes (A; A') und des Ventils (11) des Aufnahmeelementes (B) die ebene Stirnfläche (22a) des Einsteckkörpers (2) axial mit der ebenen Stirnfläche (40a) des Ventils (4, 4') ausgerichtet ist und die ebene Stirnfläche (110) des Schubelementes (11) axial mit der ebenen Stirnfläche (13a) des Kolbens (13) ausgerichtet ist.

12. Kupplung nach einem der Ansprüche 10-11, **dadurch gekennzeichnet, dass** der zentrale Kolben (13) mit dem Aufnahmeelement (6) durch einen Stift (17) verbunden ist, der sich quer zur Mittelachse (X) erstreckt und einen hinteres Teil (132) des zentralen Kolbens (13) und den Aufnahmekörper (6) durchquert.

13. Kupplung nach einem der vorhergehenden Ansprüche, **dadurch gekennzeichnet, dass** das Einsteckelement (A; A') eine Dichtung (46) umfasst, die radial zwischen dem Ventil (4; 4') des Einsteckelementes und dem Einsteckkörper (2) angeordnet ist, wenn das Ventil (4; 4') des Einsteckelementes (A; A') in der Schließstellung des Innenkanals (200) ist, wobei die Dichtung (46) vorzugsweise in einer Nut (404) des Ventils (4; 4') aufgenommen ist.

14. Kupplung nach einem der vorhergehenden Ansprüche, **dadurch gekennzeichnet, dass** der Aufnahmekörper (6) einen axialen Anschlag (79) aufweist, der geeignet ist, mit dem Einsteckkörper (2) zusammenzuarbeiten, um die Bewegung des Ineinandergreifens des Einsteckkörpers (2) und des Aufnahmekörpers (6) zu begrenzen.

15. Hydraulischer Bremskreis für ein zwei- oder dreirädriges Fahrzeug, mindestens umfassend:
- eine Zange (B) und einen Bremshebelblock (8),
- eine Rohrleitung (T) zur Fluidverbindung zwischen der Zange (G) und dem Bremshebelblock (8) und
- mindestens eine Kupplung (R) nach einem der vorhergehenden Ansprüche für den Fluidanschluss der Rohrleitung (T) mit der Zange (G) oder mit dem Bremshebelblock (8).

## Claims

1. A fluid coupling (R) comprising a male element (A) and a female element (B) complementary to the male element (A), intended to fit in one another along a central axis (X) of the coupling (R),
- the male element (A; A') comprising a male body (2) defining an inner fluid circulation channel (200), the male body (2) being provided with a circumferential stepped outer groove (20) with a front portion (20b) and a rear portion (20a) adjacent along the central axis (X), the diameter (d20b) of the front portion (20b) being larger than the diameter (d20a) of the rear portion (20a), and
- the female element (B) comprising:
- a female body (6) defining an inner cavity (600) with a front part (600a) able to receive the male body (2),
- locking balls (7) radially movable in a housing (66) of the female body (6), between a locking position of the male body (2) in the female body (6) in a coupled configuration of the coupling (R) and an unlocking position in which the locking balls (7) allow the removal of the male body (2) from the female body (6);
- a locking ring (9) provided with a circumferential front inner notch (90) and a circumferential rear inner notch (92) axially separated by a circumferential inner rim (94), the locking ring (9) being movable between a forward position, where the rear inner notch (92) keeps the locking balls (7) in the locking position, and a retracted position, where the front inner notch (90) is radially aligned with the locking balls (7) such that the locking balls (7) can reach their unlocking position,
- a spring (10) that pushes the locking ring (9) to the forward position,
- a valve (11) movable in the female body (6) between an open position and a closed position of a rear part (600b) of the inner cavity (600) and pushed back by a spring (14) toward its closed position,
- when the locking balls (7) cooperate with the front portion (20b) of the stepped outer groove (20) of the male body (2) fitted in the female body (6), the locking balls (7) form an obstacle to the inner rim (94) of the locking ring (9) along the central axis (X), when the locking balls (7) cooperate with the rear portion (20a) of the stepped outer groove (20), the locking balls (7) are able to be released relative to the inner rim (94),
- in the coupled configuration of the coupling (R), the locking balls (7) are engaged with the front portion (20b) of the stepped outer groove (20) and the rear inner notch (92);
the coupling (R) being **characterized in that** the male element (A; A') comprises a valve (4; 4') movable in the inner channel (200) of the male body (2) between an open position and a closed position of the inner channel (200), and a spring (48) that pushes the valve (4) of the male element (A) back toward its closed position,
**in that** the valve (4; 4') of the male element (A) is formed by a front part (40), a rear part (42) and at least one connecting member (44) that are separate parts, the connecting member (44) being able to abut axially against an inner surface (200d) of the inner channel (200) when the valve (4) of the male element (A) is in the closed position of the inner channel (200),
and **in that** the maximum radial dimensions of the front part (40), the rear part (42) and the connecting member (44) are smaller than the minimum inner diameter (d200e) of a cylindrical nozzle surface (200e) of the inner channel (200) of the male element (A), such that the front part (40), the rear part (42) and the connecting member (44) can be inserted into the inner channel (200) of the male element (A) by the front of the male body (2).

2. The coupling according to claim 1, **characterized in that** one of the front part (40) and the rear part (42) of the valve (4) of the male element (A) has an end (426; 406) with a smaller diameter engaged in a bore (400; 428) of the other from among the rear part (42) and the front part (40), the connecting member (44) being arranged radially outside the end (426; 406) with a smaller diameter.

3. The coupling according to claim 2, **characterized in that** the end (426; 406) with a smaller diameter is provided with an outer groove (426a; 406a) and a flange (426c; 406c) arranged axially between the outer groove (426a; 406a) and a final surface (426b; 426c) of the end with a smaller diameter, **in that** the inner channel (200) includes a circumferential inner slot (200c), the radius (R200c) of which is greater than or equal to the sum of the outer radius (R426c) of the flange (426c) and the radial dimension (h44) of the connecting member (44) and **in that** the part (40, 42) of the valve (4) with a bore (400; 428) has radial through housings (402; 430) emerging in the bore (400; 428), the connecting member (44) being engaged in the radial housings (402) and in the outer groove (426a) when the connecting balls (44) are axially offset from the inner slot (200c).

4. The coupling according to claim 3, **characterized in that** the inner slot (200c) of the male body (2) is axially offset relative to the connecting members (44) when the valve (4, 4') of the male element (A, A') is in the closed position of the inner channel (200).

5. The coupling according to claims 3 and 4, **characterized in that** the part of the valve (4) provided with the outer groove (426a) is the rear part (42), while the part provided with the radial housings (402) is the front part (40), and **in that** the spring (48) of the male element (A) pushes the rear part (42) back into axial contact with the front part (40).

6. The coupling according to one of claims 2 to 5, **characterized in that** the end (426; 406) with a smaller diameter ends with a frustoconical surface (426b; 406c), the apical angle (α) of which is preferably 90°.

7. The coupling according to one of the preceding claims, **characterized in that** the male body (2) is formed in a single piece, and **in that** the inner diameter (d200a) of the inner channel (200) at a rear tail (24) of the male body (2) is smaller than the minimum inner diameter (d200e) of the cylindrical nozzle surface (200e) of the inner channel (200).

8. The coupling according to one of the preceding claims, **characterized in that** the rear part (42) of the valve (4) of the male element (A; A') comprises radial orifices (424) and an axial orifice (422) for passage of the fluid as well as a housing (420) for the spring (48) pushing the valve (4) of the male element (A; A') back toward its closed position of the inner channel (200).

9. The coupling according to one of the preceding claims, **characterized in that** the connecting member is formed by balls (44), preferably three balls regularly distributed around the central axis (X) of the coupling (R).

10. The coupling according to one of the preceding claims, **characterized in that** the valve of the female element (B) comprises a drawer (11) translatable in the rear part (600b) of the inner cavity (600) of the female body (6) around a central piston (13) housed in the female body (6), the drawer (11) being suitable for cooperating axially with the male body (2) by contact between a planar face (110) of the drawer (11) and a planar face (22a) of the male body (2), the central piston (13) being suitable for cooperating axially with the valve (4; 4') of the male element (A) by contact between a planar face (13a) of the central piston (13) and a planar face (40a) of the valve (4; 4') of the male element (A).

11. The coupling according to claim 10, **characterized in that** on the respective closed positions of the valve (4; 4') of the male element (A; A') and the valve (11) of the female element (B), the planar face (22a) of the male body (2) is axially aligned with the planar face (40a) of the valve (4, 4'), and the planar face (110) of the drawer (11) is axially aligned with the planar face (13a) of the piston (13).

12. The coupling according to one of claims 10 to 11, **characterized in that** the central piston (13) is secured to the female body (6) by a pin (17) extending transversely to the central axis (X) and traversing a rear part (132) of the central piston (13) and the female body (6).

13. The coupling according to one of the preceding claims, **characterized in that** the male element (A; A') comprises a sealing gasket (46) arranged radially between the valve (4; 4') of the male element and the male body (2) when the valve (4; 4') of the male element (A; A') is in the closed position of the inner channel (200), the sealing gasket (46) preferably being housed in a groove (404) of the valve (4; 4').

14. The coupling according to one of the preceding claims, **characterized in that** the female body (6) comprises an axial stop (79) able to cooperate with the male body (2) to limit the fitting movement of the male body (2) in the female body (6).

15. A hydraulic braking circuit for a cycle including at least:
- a caliper (E) and a brake lever block (8),
- a fluid connection hose (T) between the caliper (E) and the brake lever block (8), and
- at least one coupling (R) according to one of the preceding claims for the fluid connection of the hose (T) with the caliper (E) or with the brake lever block (8).
